# EUROPEAN PATENT SPECIFICATION

(11) **EP 3 167 457 B1**
(45) Date of publication and mention of the grant of the patent: **29.08.2018**
(21) Application number: 15818657.7
(22) Date of filing: 27.01.2015
(51) Int. Cl.: G21G 1/10, G21C 23/00

(54) **TARGETED ISOTOPE PRODUCTION SYSTEM**
GEZIELTES ISOTOPENPRODUKTIONSSYSTEM
SYSTÈME DE PRODUCTION D'ISOTOPE CIBLÉ

(30) Priority: 08.07.2014 US 201414325401
(43) Date of publication of application: 17.05.2017
(73) Proprietor: Westinghouse Electric Company LLC, Cranberry Township, PA 16066 (US)
(72) Inventor: GULER, Cenk, Irwin, Pennsylvania 15642 (US); HEIBEL, Michael D., Harrison City, Pennsylvania 15636 (US); CONGEDO, Thomas V., Pittsburgh, Pennsylvania 15235 (US); SUTTON, Joanna C., Cranberry Township, Pennsylvania 16066 (US)
(74) Representative: Gallo, Wolfgang
(86) International application number: PCT/US2015/012989
(87) International publication number: WO 2016/007197

(56) References cited:
- EP-A1- 2 136 375
- JP-A- 2013 140 136
- US-A1- 2011 051 874
- US-A1- 2012 177 167
- US-A1- 2013 259 182
- US-A1- 2013 315 361
- US-A1- 2014 105 346

## Description

### BACKGROUND

### 1. Field

This invention pertains generally to the production of radioactive isotopes for medical and other commercial enterprises and more particularly to targeted isotope production utilizing commercial nuclear power plant reactor cores.

### 2. Related Art

The commercial production of radioactive isotopes for medical and other commercial enterprises, such as Radioisotope Thermal Generators (RTG), is a process which is limited by the very high costs associated with developing the neutron source infrastructure required to create commercial quantities of the useful isotopes. This makes the useful applications of these radioactive isotopes very expensive and subject to extreme supply and cost fluctuations due to actual or perceived potential interruptions at the very limited number of isotope production facilities available. The human cost associated with this situation is that most people are not able to afford the cost of the medical benefits that can be provided by the large number of available radioactive isotope diagnostic and treatment modalities. An example of an isotope production system can be found in patent document US 2011/0051874 A1.

Accordingly, a less expensive system and process for generating such isotopes is desired that enables the production and packaging of user controlled radioactive isotopes for use in medical or other commercial business applications, using commercial nuclear reactor cores as the needed source of neutrons to convert a targeted material to a preselected isotopic content. The foregoing object will permit a large increase in the production capability of the radioactive isotopes needed to improve the quality of life for a large number of people around the world, which should allow more people to access the benefits provided by medical and other commercial applications.

### SUMMARY

These and other objects are achieved by a targeted isotope production system employing a movable in-core nuclear reactor detector system traditionally used for mapping temperature or neutron flux in a core of the nuclear reactor. The in-core nuclear reactor detector system has detector drive assembly that is connected to an input of a first multiple path linear transfer device that, upon command, receives a detector and feeds the detector into a second multiple path linear transfer device. The second multiple path linear transfer device feeds the detector along a desired path to a selected radial core location. The second multiple path linear transfer device is alternately operable, upon command, to feed the detector through a storage conduit to a separate storage location. The targeted isotope production system of this invention includes a target material container drive assembly that is connected to an input to the first multiple path linear transfer device. A third multiple path linear transfer device is added to the in-core reactor detector system that has an input that is connected to the storage conduit and, upon command, is operable to connect the storage conduit to one of at least two outlets on the third multiple path linear transfer device. A first of the two outlets is connected to the separate storage location and a target material storage container is connected to a second of the two outlets of the third multiple path linear transfer device. Preferably, the target material storage container has a quick disconnect coupling connecting it to the second outlet and the target material container drive assembly is a cable drive system to which the target material is attached. In one preferred embodiment, the target material container drive assembly is remotely operated and the target material storage container is shielded.

This invention also contemplates a method of producing a targeted isotope in a nuclear reactor having such a movable in-core nuclear reactor detector system. The method of producing a targeted isotope inserts a target material that is to be irradiated to obtain the targeted isotope into a target material container drive assembly and drives the target material container through the first multiple path linear transfer device and through the second multiple path linear transfer device to a preselected radial position within the core. The targeted material container is maintained within the radial position within the core for a predetermined period of time before it is withdrawn from the core. The targeted material container is then driven through a third multiple path linear transfer device into a storage container which can be disconnected from the targeted material container drive system for transportation to an appropriate destination.

The invention further contemplates a method of converting a moveable in-core nuclear reactor detector system to a system that can produce a target isotope. The method includes the steps of connecting a target material container drive assembly to an input of the first multiple path linear transfer device and connecting a third multiple path linear transfer device to the storage conduit. The method then connects an output of the third multiple path transfer device to a disconnect coupling on a storage container configured to store the targeted isotope transformed from the target material.

### BRIEF DESCRIPTION OF THE DRAWINGS

A further understanding of the invention can be gained from the following description of the preferred embodiments when read in conjunction with the accompanying drawings in which:
Figure 1 is an elevational, schematic view, partially in section, illustrating the basic flux mapping system that can be employed in accordance with this invention to produce a target isotope;
Figure 2 is a schematic representation of key components of a typical movable in-core detector system;
Figure 3 is a schematic representation of the type of modification that can be made to a five-path transfer device input by this invention to accommodate a target material, to convert a typical movable in-core detector system for targeted isotope production;
Figure 4 is a schematic representation of the type of modification that can be made to a typical movable in-core detector storage path guide tube to implement one embodiment of this invention; and
Figures 5A and 5B are respectively side and front views of one embodiment of a shielded storage container that can be used to house the targeted material after it has been irradiated.

### DESCRIPTION OF THE PREFERRED EMBODIMENT

Many operational commercial reactors include design features that allow periodic access of movable nuclear sensors to the inside of the reactor core while the reactor is in operation, for purposes of measuring the reactor neutron and/or fission gamma rate distribution at different axial and radial locations within the reactor core. The measurements are made by sensors that are inserted and withdrawn from the reactor using a system that allows remote control of the insertion and removal process. Remote operation of the system is required since the sensors become highly radioactive following the operation times in the reactor core. Because of this induced radioactivity, the design of the system incorporates a storage location where these highly radioactive sensors may be stored between uses to prevent the imposition of access restrictions to the system's other components for maintenance. This existing infrastructure can be used to allow the insertion and removal of packages of a target material that will transmute into a desired radioactive isotope content following a defined amount of time inside a user-defined position inside the reactor core. The system can then be used to withdraw the target radioisotope package and insert the package into a storage device suitable for shipment of the radioactive package to a facility where the desired isotopes can be extracted from the package.

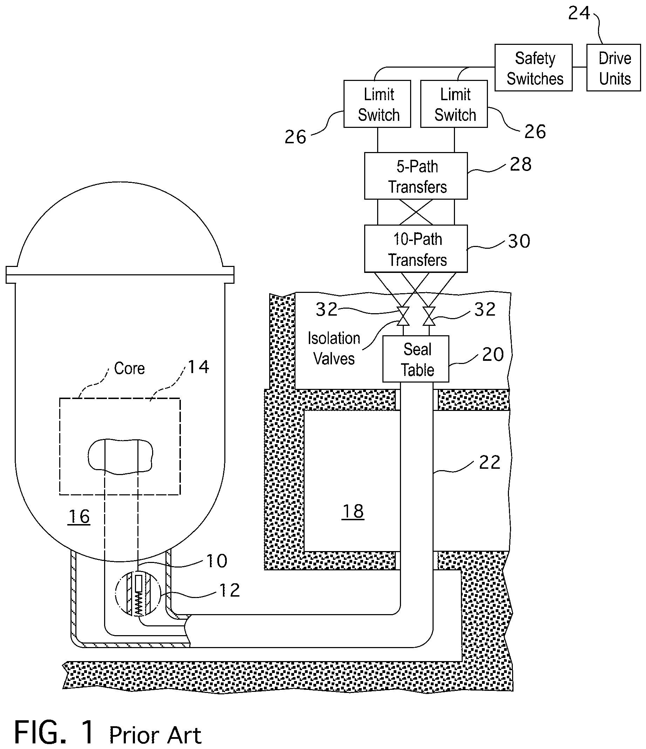

Such an in-core movable detector system is described in U.S. Patent Nos. 3,932,211 and 4,255,234 and is schematically illustrated in Figure 1. The basic movable in-core detector system comprises four, five or six detector/drive assemblies, depending upon the size of the plant, *i.e.,* two, three or four loops, which are interconnected in such a fashion that they can access various combinations of in-core flux thimbles. To obtain the thimble interconnection capability, each detector has associated with it a five-path and a ten-path rotary mechanical transfer device. A core map is made by selecting, by way of the transfer devices, particular thimbles through which the detectors are driven. To minimize mapping time, each detector is capable of being run at high speed (0.37 m/s, 72 feet per minute) from its withdrawn position to a point just below the core. At this point, the detector speed is reduced to 0.06 m/s (12 feet per minute) and the detector is transversed to the top of the core, the direction is reversed and the detector is transversed to the bottom of the core. The detector speed is then increased to 72 feet per minute (0.37 m/s) and the detector is moved to its withdrawn position (storage position). A new flux thimble is selected for mapping by rotating the transfer devices and the above procedure is repeated.

Figure 1 shows the basic system for insertion of the movable miniature detectors. Retractable thimbles 10 into which the miniature detectors 12 are driven, take the routes approximately as shown. The thimbles are inserted into the reactor core 14 through conduits extending from the bottom of the reactor vessel 16 through the concrete shield area 18 and then up to a thimble seal table 20. Since the movable detector thimbles are closed at the leading (reactor) end, they are dry inside. The thimbles must serve as a pressure barrier between the reactor water pressure (2,500 psig /17 Mpa design) and the atmosphere. Mechanical seals between the retractable thimbles and the conduits are provided at the seal table 20. The conduits 22 are essentially extensions of the reactor vessel 16, with the thimbles allowing the insertion of the in-core instrumentation movable miniature detectors. During operation, the thimbles 10 are stationary and will be retracted only under depressurized conditions during refueling or maintenance operations. Withdrawal of the thimbles to the bottom of the reactor vessel is also possible if work is required on the vessel internals. The drive system for insertion of the miniature detectors includes basically drive units 24, limit switch assemblies 26, five-path rotary transfer devices 28, ten-path rotary transfer devices 30, and isolation valves 32, as shown.

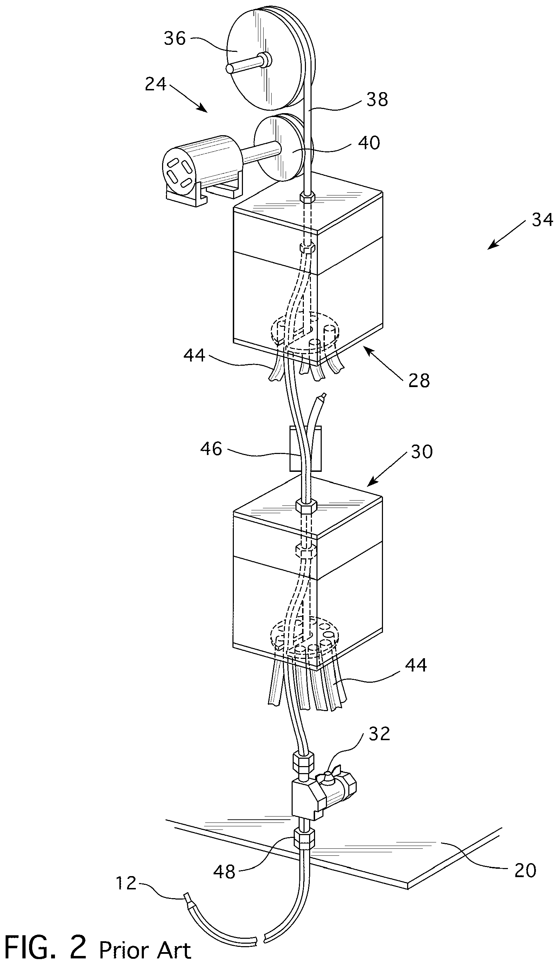

Each drive unit pushes a hollow helical wrap drive cable into the core with a miniature detector attached to the leading end of the cable and a small diameter coaxial cable, which communicates the detector output, threaded through the hollow center of the helical wrap drive cable back to the trailing end of the drive cable. Figure 2 shows a schematic representation of the typical movable in-core detector system hardware 34. The helical wrap drive cable 38 is stored on a storage wheel 36 that feeds a drive wheel 40 that is rotated in either a forward or reverse direction by the drive motor 42. The helical wrap drive cable 38 extends through a five-path rotary transfer (linear transfer device) 28 that is interconnected by the tubing 44 to a ten-path rotary transfer device 30 through a wye unit 46. The helical drive cable 38 extends from the ten-path rotary transfer unit 30, through an isolation valve 32 and high pressure seal 48 at the seal table 20 to the selected retractable thimble 10 shown in Figure 1. Separate drive units 24 are provided for each detector. Rotation of the five-path rotary transfer units 28 and ten-path rotary transfer units 30 direct each detector to a selected retractable thimble within the core, all in a well-known manner.

This existing infrastructure 34 can be used to achieve the insertion and removal of packages of a target material that will transmute into a desired radioisotope content following a defined amount of time inside a user-defined position inside the reactor core. The system can then be used to withdraw the target radioisotope package and insert the package into a storage device suitable for shipment of the radioisotope package to a facility where the desired isotopes are to be extracted from the packages. The exposure time in a given reactor location to achieve a target post-irradiation isotopic content of the operator-defined target material can be determined by those skilled in the art using features of a number of different commercially available calculation codes, such as the alpha-phoenix-ANC (APA) nuclear design code package available from Westinghouse Electric Company LLC, Cranberry Township, Pennsylvania.

The preferred embodiment of a system to accomplish the timed irradiation of a container of a target material inside a commercial nuclear reactor is realized in a system that allows the container of the target material to be remotely inserted and withdrawn via drive cables through the existing movable in-core detector thimbles. The irradiated target material is then inserted by features of the system into a shielded storage location that also serves as a container that can be used to safely transport the radioisotope material to a facility where the material can be readily removed from the container and processed to extract the desired radioisotopes. For some isotopes, it may be desirable to insert the target material into the core more than one time, respectively at different axial or radial locations to obtain the benefit of the variation of axial flux radially and axially over the core.

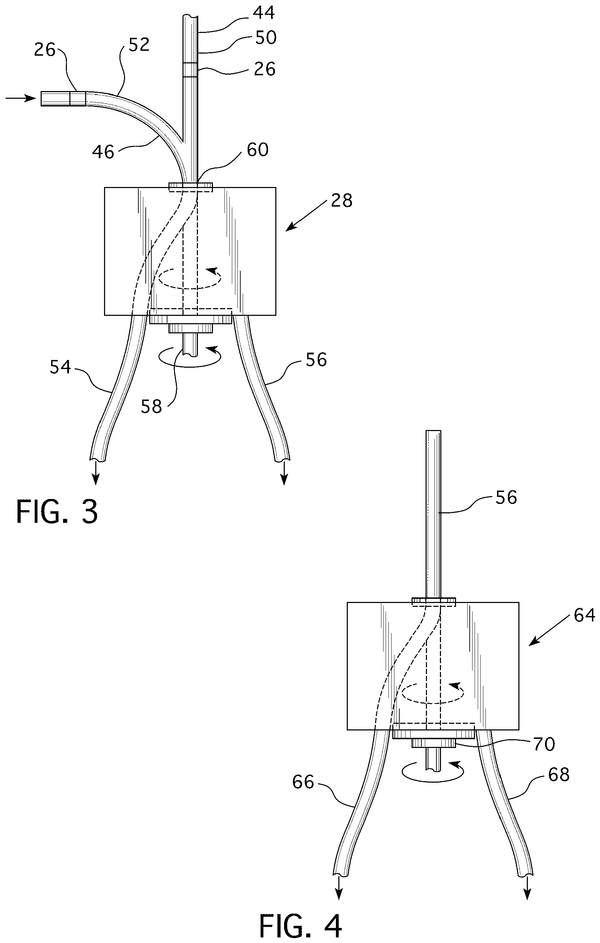

In the preferred embodiment of this system, a cable drive mechanism 24 is either permanently or temporarily installed near the existing movable in-core detector cable drive mechanism to provide the remotely controlled insertion of a target material container through one or more of the existing five-path 28 and associate ten-path 30 core location selectors for at least one of the movable in-core detector drives. Figure 3 shows the modification to the input of the existing five-path transfer device 28 that includes an additional insertion and withdrawal conduit 52 connected to the wye unit 46 that along with the detector conduit 50 couple the target material container insertion conduit 52 to the input 60 of the five-path transfer device 28. The position selector 58 remotely connects the target material container conduit 52 to either the ten-path insertion/withdrawal conduit 54 for communication to the ten-path transfer device 30 or the movable in-core detector storage/irradiated target material container insertion path conduit 56.

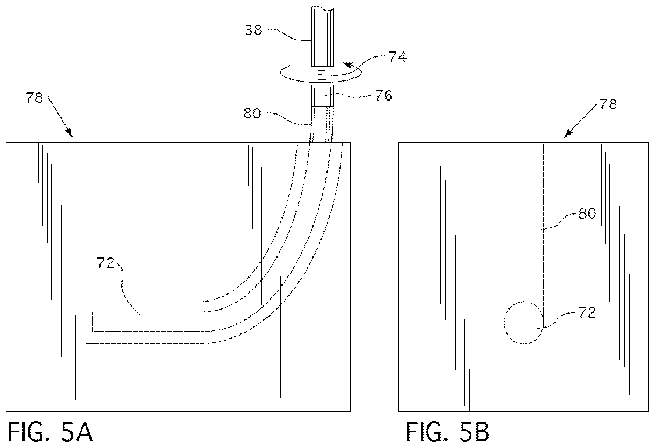

The conversion of the moveable in-core detector system further includes a modification to the associated five-path storage location guide thimble 56 just prior to the entrance of the existing thimble into the bio-shield structure, that changes the routing from the bio-shield structure into a temporarily installed irradiated target material storage container suitable to allow manual handling and local transportation of the irradiated target material. One such container will be described with regard to Figures 5A and 5B. The preferred embodiment of this routing selector is illustrated in Figure 4 and is in the form of a remotely controlled rotating S-connector tube that sends the device attached to the inserted drive cable either into the normal storage location or the movable in-core detector sensors, or into the irradiated target material storage container. The operation's routing selector 64 is similar to that of the five-path and ten-path transfer devices 28 and 30 and connects the existing storage location guide conduit 56 to either the conventional storage guide path 66 or the irradiated target material container insertion path conduit 68 under the control of the rotating position selector control 70.

As shown in Figure 5A the junction between the drive cable 38 and the target material container 72 is threaded to allow the container assembly 80 and the drive cable to be detached (unscrewed) once the irradiated material is in the container to enable reuse of the drive cable. The male and female thread are respectively shown by reference character 74 and 76. The sample shield container 78 in which the irradiated target material container 72 is stored is configured to allow the local manual separation of the target material container cable assembly 80 from the drive cable 38 and allow local handling of the container so it can be transported to another container located outside of the reactor containment building used for shipping the irradiated target material to an irradiated target material processing facility. Figures 5A and 5B respectively show a side and front view of the storage container 78.

In today's radioisotope market target materials are irradiated at a research reactor which easily costs in the order of $400 million to build. There is only a limited number of research reactors and since none of them in the United States are commercial facilities, their primary use is education and research. Irradiated samples are then shipped to a processing center where chemical separation takes place to get the isotopes ready for a final medical form and use by a patient. Even though research reactors are owned by universities and/or the government, they charge premium prices in the order of $100,000 per year per target. This invention makes it possible to generate radioisotopes in a commercial nuclear reactor. Nuclear powered electric generating facilities have a large amount of excess neutron and gamma flux in their reactors that can be utilized without any adverse impact to the electric generation mission, that can be used to produce radioisotopes.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is defined by the appended claims.

## Claims

1. A targeted isotope production system for a moveable in-core nuclear reactor detector system (34) for mapping temperature or neutron flux in a core (14) of a nuclear reactor (16), the in-core nuclear reactor detector system having a first multiple path linear transfer device (28) that upon command, adapted to receive a detector (12) and feed the detector into a second multiple path linear transfer device (30) that is adapted to feed the detector along a desired path to a selected radial core location, the second multiple path linear transfer device is alternately operable, upon command, to feed the detector through a storage conduit (56) to a separate storage location (66), the targeted isotope production system comprising:
a target material container (72) drive assembly (24) that is connected to an input (60) to the first multiple path linear transfer device (28);
a third multiple path linear transfer device (64) that has an input that is connected to the storage conduit (56) and upon command is operable to connect the storage conduit to one of at least two outlets on the third multiple path linear transfer device, a first of the two outlets is connected to the separate storage location (66) and a second outlet (68); and
a target material storage container (72) that is connected to a second of the two outlets (68) on the third multiple path linear transfer device (64).

2. The target isotope production system of Claim 1 wherein the target material storage container (72) has a quick disconnect coupling (74, 76) connecting it to the second outlet.

3. The target isotope production system of Claim 1 wherein the target material container drive assembly (24) is a cable drive system to which the target material (72) is attached.

4. The target isotope production system of Claim 3 wherein the target material container drive assembly (24) is remotely operable.

5. The target isotope production system of Claim 1 wherein the target material storage container (72) is shielded.

6. A method of producing a targeted isotope in a nuclear reactor (16) having a moveable in-core nuclear reactor detector system (34) for mapping temperature or neutron flux in a core of a nuclear reactor, the in-core nuclear reactor detector system having a first multiple path linear transfer device (28) that, upon command, receives a detector and feeds the detector into a second multiple path linear transfer device (30) that feeds the detector (12) along a desired path to a selected radial core location, the second multiple path linear transfer device is alternately operable, upon command, to feed the detector through a storage conduit (56) to a separate storage location (66), the method comprising;
inserting a target material (72) that is to be irradiated to obtain the targeted isotope into a target material container drive assembly (24);
driving the target material container (72) through the first multiple path linear transfer device (28) and through the second multiple path linear transfer device (30) to a preselected radial position within the core (14);
maintaining the position of target material container (72) within the radial position within the core (14) for a predetermined period of time;
withdrawing the target material container (72) from the core (14) after the predetermined period of time;
driving the target material container (72) through a third multiple path linear transfer device (64) into a storage container (78); and
disconnecting the target material container (72) from the target material container drive system (24).

7. The method of Claim 6 after the step of maintaining the position of the target material container (72) within the radial position within the core (14) for the predetermined period of time, the method includes the step of withdrawing the target material container from the core and reinserting the target material container into the core at a different radial or axial position for a second preselected period of time.

8. A method of converting a moveable in-core nuclear reactor detector system (34) for mapping temperature or neutron flux in a core of a nuclear reactor (16), the in-core nuclear reactor detector system having a first multiple path linear transfer device (28) that, upon command, receives a detector (12) and feeds the detector into a second multiple path linear transfer device (30) that feeds the detector along a desired path to a selected radial core location, the second multiple path linear transfer device is alternately operable, upon command, to feed the detector through a storage conduit (56) to a separate storage location (66), to a system that can produce a target isotope, the method comprising;
connecting a target material container drive assembly (24) to an input of the first multiple path linear transfer device (28);
connecting a third multiple path linear transfer device (64) to the storage conduit (56); and
connecting an output of the third multiple path transfer device (64) to a disconnect coupling (74, 76) on a storage container (78) configured to store a target isotope transformed from the target material.

## Patentansprüche

1. Gezieltes Isotopenproduktionssystem für ein bewegliches kerninternes Kernreaktor-Detektorsystem (34) zur Abbildung der Temperatur oder des Neutronenflusses in einem Kern (14) eines Kernreaktors (16), wobei das kerninterne Kernreaktor-Detektorsystem eine erste Multipfad-Linearübertragungsvorrichtung (28) umfasst, die dazu geeignet ist, auf Befehl einen Detektor (12) aufzunehmen und den Detektor in eine zweite Multipfad-Linearübertragungsvorrichtung (30) einzuleiten, die dazu geeignet ist, den Detektor entlang eines gewünschten Pfads an eine ausgewählte radiale Kernposition zu leiten, wobei die zweite Multipfad-Linearübertragungsvorrichtung abwechselnd betätigbar ist, um auf Befehl den Detektor durch eine Speicherleitung (56) an eine separate Speicherposition (66) zu leiten, wobei das gezielte Isotopenproduktionssystem umfasst:
eine Antriebsanordnung (24) für Zielmaterialbehälter (72), die mit einem Eingang (60) in die erste Multipfad-Linearübertragungsvorrichtung (28) verbunden ist;
eine dritte Multipfad-Linearübertragungsvorrichtung (64), die einen Eingang aufweist, der mit der Speicherleitung (56) verbunden ist, und auf Befehl betätigbar ist, um die Speicherleitung mit einem von zumindest zwei Ausgängen an der dritten Multipfad-Linearübertragungsvorrichtung zu verbinden, wobei ein erster der beiden Ausgänge mit der separaten Speicherposition (66) und einem zweiten Ausgang (68) verbunden ist; und
einen Zielmaterial-Speicherbehälter (72), der mit einem zweiten der zwei Ausgänge (68) an der dritten Multipfad-Linearübertragungsvorrichtung (64) verbunden ist.

2. Ziel-Isotopenproduktionssystem nach Anspruch 1, wobei der Zielmaterial-Speicherbehälter (72) eine Schnelllösekupplung (74, 76) aufweist, die ihn mit dem zweiten Auslass verbindet.

3. Ziel-Isotopenproduktionssystem nach Anspruch 1, wobei die Antriebsanordnung (24) für Zielmaterialbehälter ein Seilantriebssystem ist, an welchem das Zielmaterial (72) befestigt ist.

4. Ziel-Isotopenproduktionssystem nach Anspruch 3, wobei die Antriebsanordnung (24) für Zielmaterialbehälter fernbedienbar ist.

5. Ziel-Isotopenproduktionssystem nach Anspruch 1, wobei der Zielmaterial-Speicherbehälter (72) abgeschirmt ist.

6. Verfahren zur Herstellung eines gezielten Isotops in einem Kernreaktor (16) mit einem beweglichen kerninternen Kernreaktor-Detektorsystem (34) zur Abbildung der Temperatur oder des Neutronenflusses in einem Kern eines Kernreaktors, wobei das kerninterne Kernreaktor-Detektorsystem eine erste Multipfad-Linearübertragungsvorrichtung (28) umfasst, die auf Befehl einen Detektor aufnimmt und den Detektor in eine zweite Multipfad-Linearübertragungsvorrichtung (30) einleitet, die den Detektor (12) entlang eines gewünschten Pfads an eine ausgewählte radiale Kernposition leitet, wobei die zweite Multipfad-Linearübertragungsvorrichtung abwechselnd betätigbar ist, um auf Befehl den Detektor durch eine Speicherleitung (56) an eine separate Speicherposition (66) zu leiten, wobei das Verfahren umfasst:
Einbringen eines Zielmaterials (72), das bestrahlt werden soll, um das Zielisotop zu erhalten, in eine Antriebsanordnung (24) für Zielmaterialbehälter;
Antreiben des Zielmaterialbehälters (72) durch die erste Multipfad-Linearübertragungsvorrichtung (28) und durch die zweite Multipfad-Linearübertragungsvorrichtung (30) in eine vorgewählte radiale Position innerhalb des Kerns (14);
Beibehalten der Position des Zielmaterialbehälters (72) innerhalb der radialen Position innerhalb des Kerns (14) für eine vorbestimmte Zeitperiode;
Zurückziehen des Zielmaterialbehälters (72) aus dem Kern (14) nach der vorgewählten Zeitperiode;
Antreiben des Zielmaterialbehälters (72) durch eine dritte Multipfad-Linearübertragungsvorrichtung (64) in einen Speicherbehälter (78); und
Trennen des Zielmaterialbehälters (72) von dem Antriebssystem (24) für Zielmaterialbehälter.

7. Verfahren nach Anspruch 6, wobei das Verfahren nach dem Schritt des Beibehaltens der Position des Zielmaterialbehälters (72) innerhalb der radialen Position innerhalb des Kerns (14) für eine vorbestimmte Zeitperiode den folgenden Schritt umfasst: Zurückziehen des Zielmaterialbehälters aus dem Kern und Wiedereinführen des Zielmaterialbehälters in den Kern an einer unterschiedlichen radialen oder axialen Stellung für eine zweite vorgewählte Zeitperiode.

8. Verfahren zur Umwandlung eines beweglichen kerninternen Kernreaktor-Detektorsystems (34) zur Abbildung der Temperatur oder des Neutronenflusses in einem Kern eines Kernreaktors (16), wobei das kerninterne Kernreaktor-Detektorsystem eine erste Multipfad-Linearübertragungsvorrichtung (28) umfasst, die auf Befehl einen Detektor (12) aufnimmt und den Detektor in eine zweite Multipfad-Linearübertragungsvorrichtung (30) einleitet, die den Detektor entlang eines gewünschten Pfads an eine ausgewählte radiale Kernposition leitet, wobei die zweite Multipfad-Linearübertragungsvorrichtung abwechselnd betätigbar ist, um auf Befehl den Detektor durch eine Speicherleitung (56) an eine separate Speicherposition (66) zu leiten, in ein System das ein Zielisotop produzieren kann, wobei das Verfahren umfasst:
Verbinden einer Antriebsanordnung (24) für Zielmaterialbehälter mit einem Eingang in die erste Multipfad-Linearübertragungsvorrichtung (28);
Verbinden einer dritten Multipfad-Linearübertragungsvorrichtung (64) mit der Speicherleitung (56); und
Verbinden eines Ausgangs der dritten Multipfad-Übertragungsvorrichtung (64) mit einer Trennkupplung (74, 76) an einem Speicherbehälter (78), der dazu ausgestaltet ist, ein aus dem Zielmaterial umgewandeltes Zielisotop zu speichern.

## Revendications

1. Système de production d'un isotope cible pour un système de détection en coeur (34) mobile d'un réacteur nucléaire pour la représentation de la température ou le flux neutronique dans un coeur (14) d'un réacteur nucléaire (16), le système de détection en coeur d'un réacteur nucléaire ayant un premier dispositif de transfert linéaire à voies multiples (28), sur commande adapté à recevoir un détecteur (12) et fournir le détecteur dans un second dispositif de transfert linéaire à voies multiples (30) adapté à fournir le détecteur le long d'une voie désirée vers une position radiale choisie dans le coeur, le second dispositif de transfert linéaire à voies multiples étant opérable sur commande pour fournir le détecteur alternativement vers une position de stockage (66) séparée, à travers un conduit de stockage (56), le système de production d'un isotope cible comprenant :
un ensemble d'entraînement (24) de récipient de matériau cible (72), l'ensemble étant relié à une entrée (60) du premier dispositif de transfert linéaire à voies multiples (28) ;
un troisième dispositif de transfert linéaire à voies multiples (64) ayant une entrée reliée au conduit de stockage (56), et étant opérable sur commande pour relier le conduit de stockage à une d'au moins deux sorties du troisième dispositif de transfert linéaire à voies multiples, une première des deux sorties étant reliée à la position de stockage (66) séparée et une seconde sortie (68) ; et
un récipient de stockage de matériau cible (72) relié à une seconde des deux sorties (68) du troisième dispositif de transfert linéaire à voies multiples (64).

2. Système de production d'un isotope cible selon la revendication 1, dans lequel le récipient de stockage de matériau cible (72) a un raccord à déconnexion rapide (74, 76) qui le relie à la seconde sortie.

3. Système de production d'un isotope cible selon la revendication 1, dans lequel l'ensemble d'entraînement (24) de récipient de matériau cible est un système d'entraînement par câble auquel le matériau cible (72) est attaché.

4. Système de production d'un isotope cible selon la revendication 3, dans lequel l'ensemble d'entraînement (24) de récipient de matériau cible est opérable à distance.

5. Système de production d'un isotope cible selon la revendication 1, dans lequel le récipient de stockage de matériau cible (72) est blindé.

6. Procédé de production d'un isotope cible dans un réacteur nucléaire (16) ayant un système de détection en coeur (34) mobile d'un réacteur nucléaire pour la représentation de la température ou le flux neutronique dans un coeur d'un réacteur nucléaire, le système de détection en coeur d'un réacteur nucléaire ayant un premier dispositif de transfert linéaire à voies multiples (28) qui sur commande reçoit un détecteur (12) et fournit le détecteur dans un second dispositif de transfert linéaire à voies multiples (30) qui fournit le détecteur le long d'une voie désirée vers une position radiale choisie dans le coeur, le second dispositif de transfert linéaire à voies multiples étant opérable sur commande pour fournir le détecteur alternativement vers une position de stockage (66) séparée à travers un conduit de stockage (56), le procédé comprenant les étapes consistant à :
introduire un matériau cible (72) à irradier pour obtenir l'isotope cible dans un ensemble d'entraînement (24) de récipient de matériau cible ;
entraîner le récipient de matériau cible (72) à travers le premier dispositif de transfert linéaire à voies multiples (28) et à travers le second dispositif de transfert linéaire à voies multiples (30) à une position radiale présélectionnée à l'intérieur du coeur (14) ;
maintenir la position du récipient de matériau cible (72) dans la position radiale à l'intérieur du coeur (14) pour une durée prédéterminée ;
retirer le récipient de matériau cible (72) du coeur (14) après la durée prédéterminée ;
entraîner le récipient de matériau cible (72) à travers un troisième dispositif de transfert linéaire à voies multiples (64) dans un récipient de stockage (78) ; et
séparer le récipient de matériau cible (72) du système d'entraînement (24) de récipient de matériau cible.

7. Procédé selon la revendication 6, le procédé comprenant, après l'étape consistant à maintenir la position du récipient de matériau cible (72) dans la position radiale à l'intérieur du coeur (14) pour une durée prédéterminée, l'étape consistant à retirer le récipient de matériau cible du coeur et réintroduire le récipient de matériau cible dans le coeur à une position axiale ou radiale différente pour une seconde durée présélectionnée.

8. Procédé pour convertir un système de détection en coeur (34) mobile d'un réacteur nucléaire pour la représentation de la température ou le flux neutronique dans un coeur d'un réacteur nucléaire (16), le système de détection du coeur d'un réacteur nucléaire ayant un premier dispositif de transfert linéaire à voies multiples (28) qui sur commande reçoit un détecteur (12) et fournit le détecteur dans un second dispositif de transfert linéaire à voies multiples (30) qui fournit le détecteur le long d'une voie désirée vers une position radiale choisie dans le coeur, le second dispositif de transfert linéaire à voies multiples étant alternativement opérable sur commande pour fournir le détecteur vers une position de stockage (66) séparée, à travers un conduit de stockage (56), dans un système capable à produire un isotope cible, le procédé comprenant les étapes consistant à :
relier un ensemble d'entraînement (24) de récipient de matériau cible à une entrée du premier dispositif de transfert linéaire à voies multiples (28) ;
relier un troisième dispositif de transfert linéaire à voies multiples (64) au conduit de stockage (56) ; et
relier une sortie du troisième dispositif de transfert à voies multiples (64) à un raccord de déconnexion (74, 76) sur un récipient de stockage (78) qui est configuré pour stocker un isotope cible obtenu par transformation à partir du matériau cible.
